Europäisches Patentamt

(19) European Patent Office

Office européen des brevets

(11) **EP 0 561 660 B1**

## (12) FASCICULE DE BREVET EUROPEEN

(45) Date de publication et mention
de la délivrance du brevet:
**17.04.1996 Bulletin 1996/16**

(51) Int. Cl.$^6$: **B64G 1/64**, G01C 3/22,
F22B 27/14, F04B 43/10,
F04B 43/00, F04B 43/08

(21) Numéro de dépôt: **93400501.8**

(22) Date de dépôt: **26.02.1993**

(54) **Procédé et dispositif pour la détermination de la position et de la trajectoire relatives de deux véhicule spatiaux**

Verfahren und Vorrichtung zum Bestimmen der relativen Lage und Trajektorie von zwei Raumfahrzeugen

Method and apparatus for determining the relative position and trajectory of two spacecraft

(84) Etats contractants désignés:
**BE DE ES GB IT SE**

(30) Priorité: **16.03.1992 FR 9203094**

(43) Date de publication de la demande:
**22.09.1993 Bulletin 1993/38**

(73) Titulaire: **AEROSPATIALE Société Nationale Industrielle**
**F-75781 Paris Cédex 16 (FR)**

(72) Inventeur: **Ferro, Daniel**
**F-31200 Toulouse (FR)**

(74) Mandataire: **Bonnetat, Christian**
**CABINET BONNETAT**
**23, Rue de St. Pétersbourg**
**F-75008 Paris (FR)**

(56) Documents cités:
**EP-A- 0 132 829**          **WO-A-87/02797**
**DE-A- 4 019 214**

• **PATENT ABSTRACTS OF JAPAN vol. 14, no. 101 (P-1012)(4044) 23 Février 1990 & JP-A-13 05 312 (NEC. CORP.) 8 Décembre 1989**

**Description**

La présente invention concerne un procédé et un dispositif pour la détermination de la position relative et de la trajectoire relative naturelle d'un véhicule spatial approchant par rapport à un véhicule spatial approché. Par "trajectoire relative naturelle", on entend ci-après que, pendant la détermination de position et de trajectoire conformément à l'invention, ni le véhicule spatial approché, ni le véhicule spatial approchant, ne sont soumis à des manoeuvres volontaires, lesdits véhicules spatiaux décrivant alors librement leurs orbites respectives. Par ailleurs, comme cela ressortira clairement de la suite, la présente invention concerne aussi bien le cas où le véhicule spatial approchant poursuit le véhicule spatial approché, que le cas où le véhicule spatial approchant se trouve devant le véhicule spatial approché et est freiné pour être rejoint par ce dernier.

On sait que, notamment en vue du rendez-vous spatial entre un véhicule spatial approchant et un véhicule spatial approché, il est important de connaître la position relative et la trajectoire naturelle relative courantes des deux véhicules spatiaux. Jusqu'à présent, on met en oeuvre à cet effet différents processus.

On peut par exemple embarquer un radar à bord du véhicule spatial approchant. Cependant, la masse, le coût et la consommation électrique du radar sont importants, de sorte qu'ils constituent des contraintes rédhibitoires pour certains véhicules spatiaux.

Par ailleurs, on peut utiliser le réseau des satellites de positionnement GPS (Global Positioning System). Toutefois, cette solution comporte des incertitudes liées à la méconnaissance des caractéristiques de performances et de fiabilité du système GPS. Pour être précise, la méthode GPS nécessite des équipements spéciaux embarqués sur chacun des véhicules spatiaux.

On peut également effectuer des visées à partir du sol par radar ou théodolites et des calculs d'orbitographie pour déterminer la vitesse et la trajectoire cherchée. Cependant, il en résulte une grande dépendance vis-à-vis des infrastructures au sol et une forte imprécision pour des distances relatives inférieures à 20 km.

On notera que le document DE-A-40 19 214 décrit un procédé permettant de déterminer la distance entre un objet et un dispositif de mesure muni d'une caméra qui se déplace par rapport audit objet, à partir de la variation de l'image de deux points de l'objet, supposés se trouver à la même distance de la caméra. Selon ce document antérieur, on effectue plusieurs mesures successives de l'image pour pouvoir extrapoler, à un instant $\underline{t}$ quelconque, la taille de cette image et sa variation temporelle. La distance est alors obtenue à partir de la taille de l'image, de sa variation temporelle, ainsi que de la vitesse relative du dispositif par rapport à l'objet dans la direction de l'axe optique de la caméra. Ce document antérieur permet donc uniquement de déterminer la distance entre l'objet et le dispositif de mesure, et non la position relative, ni la trajectoire relative. De plus, ce document suppose que la vitesse relative utilisée est connue, ce qui limite bien entendu ses possibilités d'application.

Par ailleurs, le document JP-A-1 305 312 décrit un procédé permettant de déterminer, d'une part, la distance entre un chasseur et une cible, et, d'autre part, un azimut, à partir de l'image de la cible prise par une caméra montée sur le chasseur et à l'aide d'un circuit de traitement d'image. Selon ce document antérieur, la distance est déterminée à partir de la taille mesurée de l'image de la cible et de la taille réelle connue de cette cible. Toutefois, ce procédé permet uniquement de déterminer la distance et un azimut, et non la position définie dans un système d'axes de référence. De plus, il ne peut concerner la détermination d'une trajectoire relative.

La présente invention a pour objet de remédier aux inconvénients de la technique antérieure mentionnés ci-dessus. Elle concerne un système simple, fiable, robuste, précis, indépendant d'infrastructures au sol et facilement embarquable à bord d'un véhicule spatial, car de faible masse et peu consommateur en énergie électrique.

A cette fin, selon l'invention, le procédé pour la détermination de la position relative et de la trajectoire relative naturelle d'un véhicule spatial approchant par rapport à un véhicule spatial approché, lesdits véhicules spatiaux approchant et approché se trouvant sur des portions de leurs orbites respectives où leurs vecteurs vitesse sont au moins approximativement parallèles, ledit véhicule spatial approché étant stabilisé trois axes sur son orbite, et ledit véhicule spatial approché étant observé à partir dudit véhicule spatial approchant, procédé selon lequel la distance entre lesdits véhicules spatiaux approchant et approché est déterminée à partir de la taille réelle dudit véhicule spatial approché et de la taille apparente de ce dernier vu depuis ledit véhicule spatial approchant, est caractérisé :

- en ce que l'observation dudit véhicule spatial approché est effectuée dans un plan lié audit véhicule spatial approchant, orthogonal à l'axe des moyens d'observation et passant par un point de référence dudit véhicule spatial approchant ;
- en ce que, à chacun de deux instants successifs t1 et t2 :

  . on mesure, dans ledit plan et par rapport audit point de référence dudit véhicule spatial approchant, la position apparente dudit véhicule spatial approché ;
  . on mesure, dans ledit plan, la taille apparente dudit véhicule spatial approché ; et

. à l'aide desdites mesures de position et de taille apparentes, ainsi que de la taille réelle dudit véhicule approché, on calcule la position dudit point de référence dudit véhicule spatial approchant, dans un système d'axes de référence lié audit véhicule spatial approché ;

- en ce que, à partir des deux positions dudit point de référence, calculées aux instants t1 et t2, ainsi que des caractéristiques de déplacement connues dudit véhicule spatial approché sur son orbite, on calcule, dans ledit système d'axes de référence lié audit véhicule spatial approché et à l'instant t1, les composantes de la vitesse relative dudit véhicule spatial approchant par rapport audit véhicule spatial approché ; et

- en ce que, à partir de la position dudit point de référence calculée à l'instant t1 et desdites composantes de vitesse relative, également calculées à l'instant t1, on calcule, dans ledit système d'axes de référence lié audit véhicule spatial approché, les coordonnées de position dudit point de référence lié audit véhicule spatial approchant à un instant $\underline{t}$ quelconque.

Ainsi, grâce à la mesure de la taille apparente du véhicule spatial approché, on prend en compte la distance séparant lesdits véhicules spatiaux, tandis que la détermination de la position apparente du véhicule spatial approché par rapport au véhicule spatial approchant, dans les plans vertical et horizontal, permet de situer précisément ledit véhicule spatial approché.

Notamment lorsque le véhicule spatial approché présente une envergure horizontale L importante et connue, par exemple du fait qu'il comporte des panneaux solaires déployés orthogonalement au plan orbital, il est avantageux :

- que, à chacun desdits instants t1 et t2 :

  . on mesure la valeur s1 ou s2, respectivement, du site de l'origine dudit système d'axes de référence, lié audit véhicule spatial approché, par rapport audit point de référence lié audit véhicule spatial approchant ;
  . on mesure, respectivement, les valeurs ag1,ad1 ou ag2,ad2 des azimuts des extrémités gauche et droite du véhicule spatial approché par rapport audit point de référence lié audit véhicule spatial approchant ;
  . on calcule, à partir de l'envergure L et des mesures de site et d'azimut s1,ag1,ad1 et s2,ag2,ad2 respectivement, les coordonnées de position respectives X1,Y1,Z1 et X2,Y2,Z2 dudit point de référence lié audit véhicule spatial approchant, dans ledit système d'axes de référence lié audit véhicule spatial approché ;

- que, à partir des coordonnées de position X1,Y1,Z1 et X2,Y2,Z2, calculées aux instants t1 et t2, ainsi que des caractéristiques de déplacement connues dudit véhicule spatial approché sur son orbite, on calcule dans ledit système d'axes de référence lié audit véhicule spatial approché, les composantes Xp1, Yp1 et Zp1, à l'instant t1, de la vitesse relative dudit véhicule spatial approchant par rapport audit véhicule spatial approché ; et

- que, à partir des coordonnées de position X1,Y1,Z1 et des composantes de vitesse Xp1, Yp1 et Zp1, calculées à l'instant t1, on calcule les coordonnées de position X(t), Y(t) et Z(t) dudit point de référence lié audit véhicule spatial approchant à un instant $\underline{t}$ quelconque.

Si le véhicule spatial approchant est habité, l'observation dudit véhicule spatial approché peut se faire à vue. Cependant, que le véhicule spatial approchant soit habité ou non, il est préférable, afin de pouvoir automatiser les mesures de position et de taille apparentes, que l'observation dudit véhicule spatial approché se fasse par l'intermédiaire d'un dispositif de prise de vue délivrant une image à l'échelle de celle qu'on aurait dans le cas d'une observation directe qui permettrait de faire, par exemple grâce à des échelles graduées appropriées, superposées à l'image, les mesures de site et d'azimut nécessaires.

Bien entendu, si l'axe optique dudit dispositif de prise de vue est décalé par rapport au vecteur vitesse dudit véhicule spatial approchant, des valeurs de correction correspondantes sont apportées aux valeurs de site et d'azimut s1, s2, ag1, ad1, ag2 et ad2, avant calcul des coordonnées X1, Y1, Z1, X2, Y2 et Z2.

La présente invention concerne également un dispositif pour la détermination de la position relative et de la trajectoire relative naturelle d'un véhicule spatial approchant par rapport à un véhicule spatial approché, lesdits véhicules spatiaux approchant et approché se trouvant sur des portions de leurs orbites respectives où leurs vecteurs vitesse par rapport au référentiel géocentrique sont au moins approximativement parallèles, ledit véhicule spatial approché étant stabilisé trois axes sur son orbite et ledit dispositif comportant des moyens d'observation montés à bord dudit véhicule approchant, des moyens de mesure pour déterminer la taille apparente dudit véhicule spatial approché et des moyens de calcul pour calculer la distance entre lesdits véhicules spatiaux approchant et approché à partir de ladite taille apparente et de la taille réelle dudit véhicule spatial approché.

Selon l'invention, ce dispositif est caractérisé en ce que :

- lesdits moyens d'observation observent ledit véhicule spatial approché, dans un plan lié audit véhicule spatial approchant, orthogonal à l'axe des moyens d'observation et passant par un point de référence dudit véhicule spatial approchant ;
- lesdits moyens de mesure mesurent, à chacun de deux instants successifs t1 et t2 :

  . dans ledit plan et par rapport audit point de référence dudit véhicule spatial approchant, la position apparente d'un point caractéristique dudit véhicule spatial approché situé au voisinage de son centre de gravité ; et
  . dans ledit plan, la taille apparente dudit véhicule spatial approché ;

et en ce que lesdits moyens de calcul comportent :
- des premiers moyens de calcul pour calculer, à chacun desdits instants t1 et t2, à l'aide desdites mesures de position et de taille apparentes, ainsi que de la taille réelle dudit véhicule approché, la position dudit point de référence dudit véhicule spatial approchant, dans un système d'axes de référence lié audit véhicule spatial approché ;
- des seconds moyens de calcul pour calculer, à partir des deux positions dudit point de référence, calculées aux instants t1 et t2, ainsi que des caractéristiques de déplacement connues dudit véhicule spatial approché sur son orbite, et dans ledit système d'axes de référence lié audit véhicule spatial approché et à l'instant t1, les composantes de la vitesse relative dudit véhicule spatial approchant par rapport audit véhicule spatial approché ; et
- des troisièmes moyens de calcul pour calculer, à partir de la position dudit point de référence calculée à l'instant t1 et desdites composantes de vitesse relative, également calculées à l'instant t1, dans ledit système d'axes de référence lié audit véhicule spatial approché, les coordonnées de position dudit point de référence lié audit véhicule spatial approchant à un instant $\underline{t}$ quelconque.

Dans le cas où ledit véhicule spatial approché présente une envergure horizontale L importante et connue, il est avantageux :

- que, à chacun desdits instants t1 et t2, lesdits moyens de mesure :

  . mesurent la valeur s1 ou s2, respectivement, du site de l'origine dudit système d'axes de référence, lié audit véhicule spatial approché, par rapport audit point de référence lié audit véhicule spatial approchant ; et
  . mesurent, respectivement, les valeurs ag1,ad1 ou ag2,ad2 des azimuts des extrémités gauche et droite du véhicule spatial approché par rapport audit point de référence lié audit véhicule spatial approchant ;

- que lesdits premiers moyens de calcul calculent, à partir de l'envergure L et des mesures de site et d'azimut s1,ag1,ad1 ou s2,ag2,ad2 respectivement, les coordonnées de position respectives X1,Y1,Z1 et X2,Y2,Z2 dudit point de référence lié audit véhicule spatial approchant, dans ledit système d'axes de référence lié audit véhicule spatial approché ;
- que lesdits seconds moyens de calcul calculent, à partir des coordonnées de position X1,Y1,Z1 et X2,Y2,Z2, calculées aux instants t1 et t2, ainsi que de caractéristiques de déplacement connues dudit véhicule spatial approché sur son orbite, et, dans ledit système d'axes de référence lié audit véhicule spatial approché, les composantes Xp1, Yp1 et Zp1 de la vitesse relative dudit véhicule spatial approchant par rapport audit véhicule spatial approché ; et
- que lesdits troisièmes moyens de calcul calculent, à partir des coordonnées de position X1,Y1,Z1 et des composantes de vitesse Xp1, Yp1 et Zp1, calculées à l'instant t1, les coordonnées de position X(t), Y(t) et Z(t) dudit point de référence lié audit véhicule spatial approchant à un instant $\underline{t}$ quelconque.

Bien que lesdits moyens de mesure puissent présenter de nombreuses formes, dans un mode avantageux de réalisation, ils comportent un dispositif de télévision, associé audit dispositif de prise de vue et pourvu d'un écran, dont chaque point peut être identifié par la position d'un réticule mobile, déplaçable sous l'action d'un organe de commande.

Les figures du dessin annexé feront bien comprendre comment l'invention peut être réalisée. Sur ces figures, des références identiques désignent des éléments semblables.

La figure 1 illustre schématiquement deux véhicules spatiaux en phase d'approche.

La figure 2 est un schéma illustrant le principe de la présente invention.

La figure 3 montre le schéma synoptique d'un dispositif conforme à la présente invention.

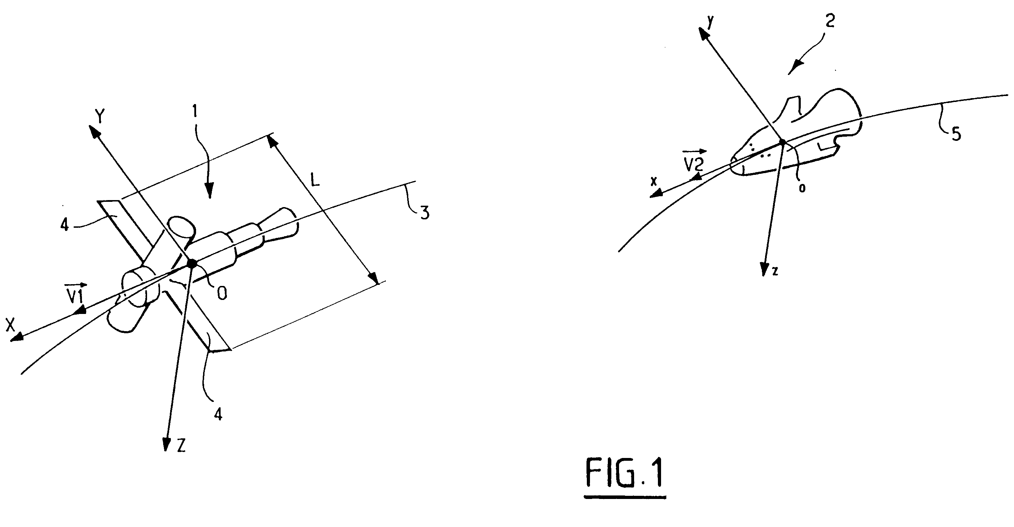

Sur la figure 1, on a représenté deux véhicules spatiaux 1 et 2 en phase préparatoire à un rendez-vous.

Le véhicule spatial 1, par exemple une station spatiale habitée, décrit une orbite 3. Une telle orbite 3 peut être circulaire autour de la Terre (non représentée) et le véhicule spatial 1 peut décrire l'orbite 3 de façon uniforme, de sorte que le véhicule spatial 1 est alors en rotation uniforme autour de la Terre. Au véhicule spatial 1, on lie un référentiel orbital local OX,OY,OZ, accompagnant ledit véhicule spatial 1 dans son mouvement de rotation autour de la Terre. L'origine O dudit référentiel orbital local peut être le centre de gravité du véhicule spatial 1, tandis que l'axe OZ vertical dudit référentiel est constamment dirigé vers le centre de la Terre, pendant le mouvement de rotation dudit véhicule spatial 1 sur son orbite 3. L'axe OX dudit référentiel orbital local est orienté suivant le vecteur vitesse $\overline{V1}$ (par rapport à la Terre) du véhicule spatial 1 se déplaçant sur son orbite 3. L'axe OX est donc tangent à ladite orbite 3 et compris dans le plan de celle-ci. Le véhicule spatial 1 est stabilisé trois axes sur son orbite 3. Il comporte des panneaux solaires 4, dont l'envergure L connue est constamment parallèle à l'axe OY, orthogonal aux axes OX et OZ. Le plan OX,OY définit le plan horizontal du véhicule spatial 1.

Le véhicule spatial 2, par exemple une navette spatiale habitée, décrit une orbite 5. Au véhicule spatial 2, on lie un référentiel orbital local ox,oy,oz, accompagnant ledit véhicule spatial 2 dans son mouvement le long de son orbite 5. L'origine o de ce dernier référentiel orbital local peut être le centre de gravité du véhicule spatial 2, tandis que l'axe vertical oz est constamment dirigé vers le centre de la Terre, pendant le mouvement dudit véhicule spatial 2 sur son orbite 5. L'axe ox est orienté suivant le vecteur vitesse $\overline{V2}$ (par rapport à la Terre) du véhicule spatial 2 sur son orbite 5. L'axe ox est donc tangent à l'orbite 5 et compris dans le plan de celle-ci. L'axe oy est orthogonal aux axes ox et oz et le plan ox,oy est horizontal.

La figure 1 illustre le cas d'un rendez-vous dans lequel le véhicule spatial approchant (le véhicule 2) poursuit le véhicule spatial approché (le véhicule 1). Il va de soi, toutefois, que la présente invention est également applicable au cas où le véhicule approchant est rattrapé par le véhicule spatial approché.

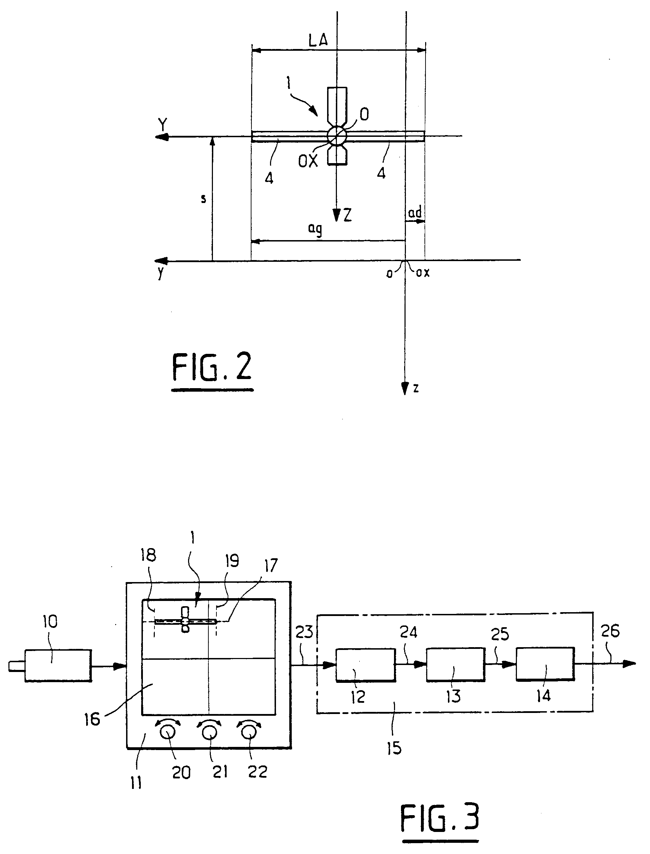

Si les axes OX et ox sont parallèles et si, depuis le véhicule spatial 2, on effectue une visée le long de l'axe ox en direction du véhicule spatial 1, on obtient la situation montrée par la figure 2.

Dans cette visée, le véhicule spatial 1 apparaît avec une envergure apparente LA pour ses panneaux solaires 4 (d'envergure réelle L), en position décalée par rapport au référentiel ox,oy,oz. Bien entendu, l'envergure apparente LA est directement représentative de la distance D séparant les deux véhicules spatiaux 1 et 2.

La position du véhicule spatial 1, par rapport au référentiel ox,oy,oz lié au véhicule spatial 2, peut être définie par :

- l'angle de site s entre le plan horizontal ox,oy et le centre 0 du véhicule spatial 1 ;
- l'angle d'azimut ag entre le plan vertical ox,oz et l'extrémité gauche des panneaux solaires 4 ; et
- l'angle d'azimut ad entre le plan vertical ox,oz et l'extrémité droite des panneaux solaires 4.

Chacun de ces trois angles pourrait, par exemple, être mesuré par la rotation d'une lunette de visée orientable (non représentée) déplacée entre une position de référence, pour laquelle son axe optique est confondu avec l'axe ox, et une position de visée, pour laquelle ledit axe optique est dirigé, respectivement, vers l'axe OY et les extrémités desdits panneaux solaires 4. En regard de la figure 3, sont décrits d'autres moyens de mesure, portant la référence 11.

Un calcul simple montre que, dans le référentiel OX,OY,OZ lié au véhicule spatial 1, les coordonnées de la position relative X, Y et Z du point de référence o lié au véhicule spatial 2, sont respectivement :

$$X = \frac{L}{\cos s.|tg\ ag - tg\ ad|} \text{ x le signe de } \left[\frac{\Pi}{2} - \left|\frac{ag+ad}{2} - \Pi\right|\right]$$

$$Y = \frac{L.tg\ (ag+ad)/2}{|tg\ ag - tg\ ad|} \text{ x le signe de } \left[\frac{\Pi}{2} - \left|\frac{ag+ad}{2} - \Pi\right|\right]$$

$$Z = \frac{L.tgs}{\cos s.|tg\ ag - tg\ ad|}$$

Bien entendu, la distance D peut alors être calculée par la formule :

$$D = \sqrt{(X^2 + Y^2 + Z^2)}$$

Conformément à l'invention, pour déterminer la trajectoire relative naturelle du véhicule spatial 2 par rapport au véhicule spatial 1, on calcule, à deux instants t1 et t2 successifs, la valeur des coordonnées X, Y et Z par la méthode ci-dessus. On obtient donc deux groupes de valeurs X1,Y1,Z1 et X2,Y2,Z2, à partir desquels il est possible de déterminer, à l'instant t1, les composantes Xp1, Yp1, Zp1 de la vitesse relative du véhicule spatial 2 dans le référentiel OX, OY, OZ. L'écart temporel entre les instants t1 et t2 est choisi pour que les coordonnées X1,Y1,Z1 et X2,Y2,Z2 correspondent à une variation de position suffisante pour le véhicule spatial 2, afin que la mesure soit significative.

Ensuite, grâce à la connaissance, à l'instant t1, des coordonnées de position X1,Y1,Z1 et des composantes de vitesse Xp1, Yp1 et Zp1, il est possible de prédire la trajectoire relative future du véhicule spatial 2.

Dans le cas mentionné ci-dessus où l'orbite 3 est circulaire et est décrite de façon uniforme par le véhicule spatial 1, avec une pulsation orbitale égale à $\omega$, on trouve par un calcul simple que :

$$Xp1 = \frac{DE - BF}{\Delta}$$

$$Yp1 = \frac{Y2 - Y1 \cos [\omega(t2\text{-}t1)]}{\sin [\omega(t2\text{-}t1)]}$$

$$Zp1 = \frac{AF - CE}{\Delta}$$

avec :

$\Delta$ = 8-8 cos $[\omega(t2\text{-}t1)]$ - 3$\omega$ (t2-t1) sin $[\omega$ (t2-t1)]

A = (4/$\omega$) sin $[\omega(t2\text{-}t1)]$ - 3 (t2-t1)

B = (2/$\omega$) {cos $[\omega(t2\text{-}t1)]$ - 1}

C = -B

D = {sin $[\omega(t2\text{-}t1)]$} /$\omega$

E = X2 - X1 + {6 sin $[\omega(t2\text{-}t1)]$ - 6$\omega$ (t2-t1)} Z1

F = Z2 + {3 cos $[\omega(t2\text{-}t1)]$ -4} Z1

Puisqu'on connaît alors la position X1, Y1, Z1 et la vitesse Xp1, Yp1 et Zp1, à l'instant t1, du véhicule spatial approchant 2 par rapport au véhicule spatial approché 1, il est possible de prédire la trajectoire naturelle future, en la calculant point par point.

A un instant $\underline{t}$ quelconque, la position X(t), Y(t), Z(t) du véhicule spatial 2 par rapport au véhicule spatial 1 sera :

$$X(t) = X1 - 2/\omega\{Zp1 \cos [\omega(t\text{-}t1)] + (3\omega Z1 - 2Xp1)\sin [\omega(t\text{-}t1)]\} + 3/2 (4\omega Z1 - 2Xp1) (t\text{-}t1) + 2Zp1/\omega$$

$$Y(t) = Y1 \cos [\omega(t\text{-}t1)] + Yp1/\omega \sin [\omega(t\text{-}t1)]$$

$$Z(t) = 1/\omega \{Zp1 \sin [\omega(t\text{-}t1)] - (3\omega Z1 - 2Xp1) \cos [\omega(t\text{-}t1)] + 4\omega Z1 - 2Xp1\}$$

Dans les calculs précédents, on a supposé que la visée se faisait parallèlement à l'axe $\underline{ox}$ et que l'angle de roulis du véhicule spatial approchant 2 était nul. Bien entendu, si la visée (par exemple effectuée, comme cela est indiqué ci-après, à l'aide d'une caméra, dont l'axe optique peut ne pas être confondu avec l'axe $\underline{ox}$) n'est pas parallèle à l'axe $\underline{ox}$ et/ou si l'angle de roulis du véhicule spatial 2 n'est pas nul, on introduit des correctifs au niveau du calcul de X1,Y1,Z1 et X2,Y2,Z2.

Sur la figure 3, on a représenté un mode de réalisation du dispositif conforme à la présente invention. Ce mode de réalisation, monté à bord du véhicule spatial 2, comporte une caméra 10 observant le véhicule spatial 1, un dispositif de télévision 11 et trois moyens de calculs 12, 13 et 14, éventuellement regroupés dans un calculateur unique 15.

Le dispositif de télévision 11 comporte un écran 16 et il est du type dans lequel des réticules 17, 18 et 19, respectivement mobiles sous l'action d'organes de commande 20, 21, 22 (par exemple des boutons rotatifs), peuvent être déplacés sur ledit écran 16 en indiquant leur position sur celui-ci.

Ainsi, la caméra 10 forme sur l'écran 16 une image apparente du véhicule spatial 1 dont la taille est à l'échelle de la taille apparente qui résulterait d'une observation directe dudit véhicule spatial 1, depuis le véhicule spatial 2. A l'instant t1, l'organe de commande 20 est actionné pour que le réticule 17 passe par le plan horizontal médian de ladite image, de sorte que le dispositif de télévision 11 connaît la valeur de site s1. Au même instant t1, les organes de commande 21 et 22 sont également actionnés, pour que les réticules 18 et 19 soient amenés sur l'extrémité gauche et droite de l'envergure de ladite image du véhicule 1. On obtient donc les mesures d'azimut ag1 et ad1. A l'instant t2, de façon analogue, on déplace lesdits réticules 17, 18 et 19, de sorte que le dispositif de télévision 11 connaît maintenant les mesures s2, ag2 et ad2.

Ces mesures s1, s2, ag1, ad1, ag2 et ad2 sont adressées aux moyens de calcul 12 (liaison 23), connaissant l'envergure L, qui calculent les coordonnées X1,Y1,Z1 et X2,Y2,Z2, de la façon décrite ci-dessus. Ces coordonnées sont, à leur tour, transmises aux moyens de calcul 13 (liaison 24), connaissant la pulsation , qui déterminent, comme cela a été mentionné, les composantes de vitesse Xp1, Yp1 et Zp1.

Enfin, par la liaison 25, les coordonnées X1,Y1,Z1 et les composantes Xp1, Yp1 et Zp1 sont transmises aux moyens de calcul 14 qui, à leur sortie 26, délivrent X(t), Y(t) et Z(t).

Bien entendu, le dispositif décrit en regard de la figure 3 n'est qu'un mode de réalisation possible du dispositif conforme à la présente invention. En effet, par exemple, le dispositif de télévision 11 pourrait être remplacé par un dispositif automatique d'analyse d'image en vue de l'automatisation complète du dispositif de l'invention, ou bien l'ensemble de la caméra 10 et du dispositif de télévision 11 pourrait être remplacé par un système de collimateur gradué ou un viseur tête haute, pour la saisie humaine des mesures s1, s2, ag1, ag2, ad1 et ad2, qui seraient ensuite entrées dans le calculateur 15.

## Revendications

1. Procédé pour la détermination de la position relative et de la trajectoire relative naturelle d'un véhicule spatial approchant (2) par rapport à un véhicule spatial approché (1), lesdits véhicules spatiaux approchant et approché se trouvant sur des portions de leurs orbites respectives (5,3) où leurs vecteurs vitesse ($\overline{V2},\overline{V}1$) sont au moins approximativement parallèles, ledit véhicule spatial approché (1) étant stabilisé trois axes sur son orbite (3), et ledit véhicule spatial approché (1) étant observé à partir dudit véhicule spatial approchant (2), procédé selon lequel la distance entre lesdits véhicules spatiaux approchant et approché est déterminée à partir de la taille réelle dudit véhicule spatial approché et de la taille apparente de ce dernier vue depuis ledit véhicule spatial approchant, caractérisé :

   - en ce que l'observation dudit véhicule spatial approché (1) est effectuée dans un plan (oy,oz) lié audit véhicule spatial approchant, orthogonal à l'axe du moyen d'observation et passant par un point de référence (o) dudit véhicule spatial approchant ;
   - en ce que, à chacun de deux instants successifs t1 et t2 :

      . on mesure, dans ledit plan et par rapport audit point de référence (o) dudit véhicule spatial approchant, la position apparente dudit véhicule spatial approché ;
      . on mesure, dans ledit plan, la taille apparente dudit véhicule spatial approché ; et
      . à l'aide desdites mesures de position et de taille apparentes, ainsi que de la taille réelle dudit véhicule approché, on calcule la position dudit point de référence (o) dudit véhicule spatial approchant, dans un système d'axes de référence (OX,OY,OZ) lié audit véhicule spatial approché ;

   - en ce que, à partir des deux positions dudit point de référence (o), calculées aux instants t1 et t2, ainsi que des caractéristiques de déplacement connues dudit véhicule spatial approché sur son orbite, on calcule, dans ledit système d'axes de référence (OX,OY,OZ) lié audit véhicule spatial approché et à l'instant t1, les composantes de la vitesse relative dudit véhicule spatial approchant par rapport audit véhicule spatial approché ; et
   - en ce que, à partir de la position dudit point de référence calculée à l'instant t1 et desdites composantes de vitesse relative, également calculées à l'instant t1, on calcule, dans ledit système d'axes de référence lié audit véhicule spatial approché, les coordonnées de position dudit point de référence lié audit véhicule spatial approchant à un instant $\underline{t}$ quelconque.

2. Procédé selon la revendication 1, appliqué au cas où ledit véhicule spatial approché comporte une envergure horizontale L importante et connue, caractérisé :

   - en ce que, à chacun desdits instants t1 et t2 :

      . on mesure la valeur s1 ou s2, respectivement, du site de l'origine (0) dudit système d'axes de référence, lié audit véhicule spatial approché, par rapport audit point de référence (o) lié audit véhicule spatial approchant ;
      . on mesure, respectivement, les valeurs ag1,ad1 ou ag2,ad2 des azimuts des extrémités gauche et droite du véhicule spatial approché par rapport audit point de référence lié audit véhicule spatial approchant ;
      . on calcule, à partir de l'envergure L et des mesures de site et d'azimut s1,ag1,ad1 et s2,ag2,ad2 respectivement, les coordonnées de position respectives X1,Y1,Z1 et X2,Y2,Z2 dudit point de référence lié audit véhicule spatial approchant, dans ledit système d'axes de référence lié audit véhicule spatial approché ;

   - en ce que, à partir des coordonnées de position X1,Y1,Z1 et X2,Y2,Z2, calculées aux instants t1 et t2, ainsi que des caractéristiques de déplacement connues dudit véhicule spatial approché sur son orbite, on calcule, dans ledit système d'axes de référence lié audit véhicule spatial approché, les composantes Xp1, Yp1 et Zp1, à l'instant t1, de la vitesse relative dudit véhicule spatial approchant par rapport audit véhicule spatial approché ; et
   - en ce que, à partir des coordonnées de position X1,Y1,Z1 et des composantes de vitesse Xp1, Yp1 et Zp1, calculées à l'instant t1, on calcule les coordonnées de position X(t), Y(t) et Z(t) dudit point de référence lié audit véhicule spatial approchant à un instant $\underline{t}$ quelconque.

3. Procédé selon la revendication 2,
caractérisé en ce que l'observation dudit véhicule spatial approché se fait par l'intermédiaire d'un dispositif de prise de vue délivrant une image dont la taille est à l'échelle de la taille apparente qui résulterait d'une observation directe.

4. Procédé selon la revendication 3, dans lequel l'axe optique dudit dispositif de prise de vue est décalé par rapport au vecteur vitesse dudit véhicule spatial approchant,
caractérisé en ce que des valeurs de correction correspondantes sont apportées aux valeurs de site et d'azimut s1, s2, ag1, ad1, ag2 et ad2, avant calcul des coordonnées X1, Y1, Z1, X2, Y2 et Z2.

5. Procédé selon la revendication 2, dans lequel ledit véhicule spatial approché décrit de façon uniforme une orbite circulaire avec une pulsation $\omega$,
caractérisé en ce que les composantes de vitesse relative Xp1, Yp1 et Zp1 sont respectivement égales à :

$$Xp1 = \frac{DE - BF}{\Delta}$$

$$Yp1 = \frac{Y2 - Y1 \cos [\omega(t2-t1)]}{\sin [\omega(t2-t1)]}$$

$$Zp1 = \frac{AF - CE}{\Delta}$$

avec :

$\Delta = 8-8 \cos [\omega(t2-t1)] - 3\omega (t2-t1) \sin [\omega (t2-t1)]$
$A = (4/\omega) \sin [\omega(t2-t1)] - 3 (t2-t1)$
$B = (2/\omega) \{\cos [\omega(t2-t1)] - 1\}$
$C = -B$
$D = \{\sin [\omega(t2-t1)]\} /\omega$
$E = X2 - X1 + \{6 \sin [\omega(t2-t1)] - 6\omega (t2-t1)\} Z1$
$F = Z2 + \{3 \cos [\omega(t2-t1)] -4\} Z1$

6. Procédé selon la revendication 5,
caractérisé en ce que les coordonnées de position X(t), Y(t) et Z(t) sont respectivement égales à :

$$X(t) = X1 - 2/\omega\{Zp1 \cos [\omega(t-t1)] + (3\omega Z1 - 2Xp1)\sin [\omega(t-t1)]\} + 3/2 (4\omega Z1 - 2Xp1) (t-t1) + 2Zp1/\omega$$

$$Y(t) = Y1 \cos [\omega(t-t1)] + Yp1/\omega \sin [\omega (t-t1)]$$

$$Z(t) = 1/\omega \{Zp1 \sin [\omega (t-t1)] - (3\omega Z1 - 2Xp1) \cos [\omega(t-t1)] + 4\omega Z1 - 2Xp1\}$$

7. Dispositif pour la détermination de la position relative et de la trajectoire relative naturelle d'un véhicule spatial approchant (2) par rapport à un véhicule spatial approché (1), lesdits véhicules spatiaux approchant et approché se trouvant sur des portions de leurs orbites respectives (5,3) où leurs vecteurs vitesse ($\overline{V2},\overline{V1}$) par rapport au référentiel géocentrique sont au moins approximativement parallèles, ledit véhicule spatial approché étant stabilisé trois axes sur son orbite et ledit dispositif comportant des moyens d'observation (10) montés à bord dudit véhicule approchant, des moyens de mesure (11) pour déterminer la taille apparente dudit véhicule spatial approché et des moyens de calcul pour calculer la distance entre lesdits véhicules spatiaux approchant et approché à partir de ladite taille apparente et de la taille réelle dudit véhicule spatial approché,
caractérisé en ce que :

- lesdits moyens d'observation (10) observent ledit véhicule spatial approché (1), dans un plan (oz, oy) lié audit véhicule spatial approchant, orthogonal à l'axe des moyens d'observation et passant par un point de référence (o) dudit véhicule spatial approchant ;
- lesdits moyens de mesure (11) mesurent, à chacun de deux instants successifs t1 et t2 :

  . dans ledit plan et par rapport audit point de référence dudit véhicule spatial approchant, la position apparente d'un point caractéristique dudit véhicule spatial approché ; et
  . dans ledit plan, la taille apparente dudit véhicule spatial approché ;

et en ce que lesdits moyens de calcul comportent :

-   des premiers moyens de calcul (12) pour calculer, à chacun desdits instants t1 et t2, à l'aide desdites mesures de position et de taille apparentes, ainsi que de la taille réelle dudit véhicule approché, la position dudit point de référence dudit véhicule spatial approchant, dans un système d'axes de référence lié audit véhicule spatial approché ;

-   des seconds moyens de calcul (13) pour calculer, à partir des deux positions dudit point de référence, calculées aux instants t1 et t2, ainsi que des caractéristiques de déplacement connues dudit véhicule spatial approché sur son orbite, et dans ledit système d'axes de référence lié audit véhicule spatial approché et à l'instant t1, les composantes de la vitesse relative dudit véhicule spatial approchant par rapport audit véhicule spatial approché ; et

-   des troisièmes moyens de calcul (14) pour calculer, à partir de la position dudit point de référence calculée à l'instant t1 et desdites composantes de vitesse relative, également calculées à l'instant t1, dans ledit système d'axes de référence lié audit véhicule spatial approché, les coordonnées de position dudit point de référence lié audit véhicule spatial approchant à un instant t quelconque.

8.  Dispositif selon la revendication 7, destiné au cas où ledit véhicule spatial approché comporte une envergure horizontale L importante et connue,
    caractérisé :

    -   en ce que, à chacun desdits instants t1 et t2, lesdits moyens de mesure (11) :

        .   mesurent la valeur s1 ou s2, respectivement, du site de l'origine (0) dudit système d'axes de référence, lié audit véhicule spatial approché, par rapport audit point de référence (o) lié audit véhicule spatial approchant ; et

        .   mesurent, respectivement, les valeurs ag1,ad1 ou ag2,ad2 des azimuts des extrémités gauche et droite du véhicule spatial approché par rapport audit point de référence lié audit véhicule spatial approchant ;

    -   en ce que lesdits premiers moyens de calcul (12) calculent, à partir de l'envergure L et des mesures de site et d'azimut s1,ag1,ad1 ou s2,ag2,ad2 respectivement, les coordonnées de position respectives X1,Y1,Z1 et X2,Y2,Z2 dudit point de référence lié audit véhicule spatial approchant, dans ledit système d'axes de référence lié audit véhicule spatial approché ;

    -   en ce que lesdits seconds moyens de calcul (13) calculent, à partir des coordonnées de position X1,Y1,Z1 et X2,Y2,Z2, calculées aux instants t1 et t2, ainsi que des caractéristiques de déplacement connues dudit véhicule spatial approché sur son orbite, et, dans ledit système d'axes de référence lié audit véhicule spatial approché, les composantes Xp1, Yp1 et Zp1 de la vitesse relative dudit véhicule spatial approchant par rapport audit véhicule spatial approché ; et

    -   en ce que lesdits troisièmes moyens de calcul (14) calculent, à partir des coordonnées de position X1,Y1,Z1 et des composantes de vitesse Xp1, Yp1 et Zp1, calculées à l'instant t1, les coordonnées de position X(t), Y(t) et Z(t) dudit point de référence lié audit véhicule spatial approchant à un instant t quelconque.

9.  Dispositif selon la revendication 8,
    caractérisé en ce que lesdits moyens d'observation comportent un dispositif de prise de vue (10) délivrant une image dont la taille est à l'échelle de la taille apparente qui résulterait d'une observation directe.

10. Dispositif selon l'une des revendications 8 ou 9,
    caractérisé en ce que lesdits moyens de mesure (11) comportent un dispositif de télévision pourvu d'un écran (16), dont chaque point peut être identifié par la position d'un réticule mobile (17,18,19) déplaçable sous l'action d'un organe de commande (20,21,22).

## Claims

1.  Method for determining the relative position and the natural relative path of an approaching space vehicle (2) with respect to an approached space vehicle (1), the said approaching and approached space vehicles being in parts of their respective orbits (5, 3) in which their velocity vectors ($\overline{V2}$, $\overline{V1}$) are at least approximately parallel and the said approached space vehicle (1) being triaxially stabilized in its orbit (3), and the said approached space vehicle (1) being observed from the said approaching space vehicle (2), method according to which the distance between the said approaching and approached space vehicles is determined from the true size of the said approached space vehicle and from the apparent size of the latter seen from the said approaching space vehicle,
    characterized in that

- the said approached space vehicle (1) is observed in a plane (oy, oz) tied to the said approaching space vehicle, orthogonal to the axis of the means of observation and passing through a reference point (o) of the said approaching space vehicle;

- at each of two successive instants t1 and t2:

  - the apparent position of the said approached space vehicle is measured in the said plane and with respect to the said reference point (o) of the said approaching space vehicle;
  - the apparent size of the said approached space vehicle is measured in the said plane; and
  - with the aid of the said measurements of apparent position and apparent size, as well as of the true size of the said approached vehicle, the position of the said reference point (o) of the said approaching space vehicle is calculated in a system of reference axes (OX, OY, OZ) tied to the said approached space vehicle;

- from the two positions of the said reference point (o), calculated at the instants t1 and t2, as well as from the known characteristics of movement of the said approached space vehicle in its orbit, the components of the relative velocity of the said approaching space vehicle with respect to the said approached space vehicle are calculated at the instant t1 in the said system of reference axes (OX, OY, OZ) tied to the said approached space vehicle; and

- from the position of the said reference point, calculated at the instant t1, and from the said components of relative velocity, likewise calculated at the instant t1, the position coordinates of the said reference point tied to the said approaching space vehicle are calculated at an arbitrary instant $t$ in the said system of reference axes tied to the said approached space vehicle.

2. Method according to Claim 1, applied to the case where the said approached space vehicle includes a sizable, known horizontal wingspan L,
characterized in that

- at each of the said instants t1 and t2:

  - the value s1 or s2, respectively, of the elevation of the origin (0) of the said system of reference axes, tied to the said approached space vehicle, is measured with respect to the said reference point (o) tied to the said approaching space vehicle;
  - the values ag1, ad1 or ag2, ad2 of the azimuths of the left and right tips of the approached space vehicle are measured with respect to the said reference point tied to the said approaching space vehicle;
  - the respective position coordinates X1, Y1, Z1 and X2, Y2, Z2 of the said reference point tied to the said approaching space vehicle, in the said system of reference axes tied to the said approached space vehicle, are calculated from the wingspan L and from the measurements of elevation and of azimuth s1, ag1, ad1 and s2, ag2, ad2 respectively;

- the components Xp1, Yp1 and Zp1, at the instant t1, of the relative velocity of the said approaching space vehicle with respect to the said approached space vehicle are calculated, in the said system of reference axes tied to the said approached space vehicle, from the position coordinates X1, Y1, Z1 and X2, Y2, Z2, calculated at the instants t1 and t2, as well as from the known characteristics of movement of the said approached space vehicle in its orbit; and

- the position coordinates X(t), Y(t) and Z(t) of the said reference point tied to the said approaching space vehicle are calculated at an arbitrary instant $t$ from the position coordinates X1, Y1, Z1 and from the velocity components Xp1, Yp1 and Zp1, calculated at the instant t1.

3. Method according to Claim 2, characterized in that the observation of the said approached space vehicle is made by way of a filming device delivering an image whose size is to the scale of the apparent size which would result from a direct observation.

4. Method according to Claim 3, in which the optical axis of the said filming device is offset with respect to the velocity vector of the said approaching space vehicle,
characterized in that corresponding correction values are accorded to the values of elevation and of azimuth s1, s2, ag1, ad1, ag2 and ad2, before calculating the coordinates X1, Y1, Z1, X2, Y2 and Z2.

5. Method according to Claim 2, in which the said approached space vehicle describes a circular orbit in a uniform manner with an angular frequency $\omega$, characterized in that the components of relative velocity Xp1, Yp1 and Zp1 are respectively equal to:

$$Xp1 = \frac{DE - BF}{\Delta}$$

$$Yp1 = \frac{Y2 - Y1 \cos [\omega(t2-t1)]}{\sin [\omega(t2-t1)]}$$

$$Zp1 = \frac{AF - CE}{\Delta}$$

with:

$\Delta = 8-8 \cos [\omega(t2-t1)] - 3\omega (t2-t1) \sin [\omega (t2-t1)]$
$A = (4/\omega) \sin [\omega(t2-t1)] - 3 (t2-t1)$
$B = (2/\omega) \{\cos [\omega(t2-t1)] - 1\}$
$C = -B$
$D = \{\sin [\omega(t2-t1)]\} /\omega$
$E = X2 - X1 + \{6 \sin [\omega(t2-t1)] - 6\omega (t2-t1)\} Z1$
$F = Z2 + \{3 \cos [\omega(t2-t1)] -4\} Z1$

6. Method according to Claim 5, characterized in that the position coordinates X(t), Y(t) and Z(t) are respectively equal to:

$$X(t) = X1 - 2/\omega\{Zp1 \cos [\omega(t-t1)] + (3\omega Z1 - 2Xp1)\sin [\omega(t-t1)]\} + 3/2 (4\omega Z1 - 2Xp1) (t-t1) + 2Zp1/\omega$$

$$Y(t) = Y1 \cos [\omega(t-t1)] + Yp1/\omega \sin [\omega(t-t1)]$$

$$Z(t) = 1/\omega \{Zp1 \sin [\omega (t-t1)] - (3\omega Z1 - 2Xp1) \cos [\omega(t-t1)] + 4\omega Z1 - 2Xp1\}$$

7. Device for determining the relative position and the natural relative path of an approaching space vehicle (2) with respect to an approached space vehicle (1), the said approaching and approached space vehicles being in parts of their respective orbits (5, 3) in which their velocity vectors ($\overline{V2}$, $\overline{V1}$) with respect to the geocentric frame of reference are at least approximately parallel, the said approached space vehicle being triaxially stabilized in its orbit, and the said device including means of observation (10) mounted aboard the said approaching vehicle, measuring means (11) for determining the apparent size of the said approached space vehicle and calculating means for calculating the distance between the said approaching and approached space vehicles from the said apparent size and from the true size of the said approached space vehicle,
characterized in that:

- the said means of observation (10) observe the said approached space vehicle (1), in a plane (oz, oy) tied to the said approaching space vehicle, orthogonal to the axis of the means of observation and passing through a reference point (o) of the said approaching space vehicle;
- the said measuring means (11) measure, at each of two successive instants t1 and t2:

  • the apparent position of a characteristic point of the said approached space vehicle in the said plane and with respect to the said reference point of the said approaching space vehicle; and
  • the apparent size of the said approached space vehicle, in the said plane;

  and in that the said calculating means include:
- first calculating means (12) for calculating, at each of the said instants t1 and t2, with the aid of the said measurements of apparent position and apparent size, as well as of the true size of the said approached vehicle, the position of the said reference point of the said approaching space vehicle in a system of reference axes tied to the said approached space vehicle;
- second calculating means (13) for calculating, from the two positions of the said reference point, calculated at the instants t1 and t2, as well as from the known characteristics of movement of the said approached space vehicle in its orbit, the components of the relative velocity of the said approaching space vehicle with respect to the said approached space vehicle at the instant t1 in the said system of reference axes tied to the said approached space vehicle; and
- third calculating means (14) for calculating, from the position of the said reference point, calculated at the instant t1, and from the said components of relative velocity, likewise calculated at the instant t1, the position coordinates of the said reference point tied to the said approaching space vehicle at an arbitrary instant $\underline{t}$ in the said system of reference axes tied to the said approached space vehicle.

8. Device according to Claim 7, intended for the case where the said approached space vehicle includes a sizable, known horizontal wingspan L,
characterized in that:

- at each of the said instants t1 and t2, the said measuring means (11):

  • measure the value s1 or s2, respectively, of the elevation of the origin (0) of the said system of reference axes, tied to the said approached space vehicle, with respect to the said reference point (o) tied to the said approaching space vehicle; and
  • measure, respectively, the values ag1, ad1 or ag2, ad2 of the azimuths of the left and right tips of the approached space vehicle with respect to the said reference point tied to the said approaching space vehicle;

- the said first calculating means (12) calculate the respective position coordinates X1, Y1, Z1 and X2, Y2 and Z2 of the said reference point tied to the said approaching space vehicle, in the said system of reference axes tied to the said approached space vehicle, from the wingspan L and from the measurements of elevation and of azimuth s1, ag1, ad1 or s2, ag2, ad2 respectively;
- the said second calculating means (13) calculate the components Xp1, Yp1 and Zp1 of the relative velocity of the said approaching space vehicle with respect to the said approached space vehicle, in the said system of reference axes tied to the said approached space vehicle, from the position coordinates X1, Y1, Z1 and X2, Y2, Z2, calculated at the instants t1 and t2, as well as from the known characteristics of movement of the said approached space vehicle in its orbit; and
- the said third calculating means (14) calculate the position coordinates X(t), Y(t) and Z(t) of the said reference point tied to the said approaching space vehicle at an arbitrary instant $\underline{t}$ from the position coordinates X1, Y1, Z1 and from the velocity components Xp1, Yp1 and Zp1, calculated at the instant t1.

9. Device according to Claim 8, characterized in that the said means of observation include a filming device (10) delivering an image whose size is to the scale of the apparent size which would result from a direct observation.

10. Device according to either one of Claims 8 and 9, characterized in that the said measuring means (11) include a television device provided with a screen (16), each point of which can be identified by the position of a mobile crosshair (17, 18, 19) which can be moved under the action of a control member (20, 21, 22).

**Patentansprüche**

1. Verfahren zur Bestimmung der relativen Position und der natürlichen relativen Flugbahn eines sich annähernden Raumfahrzeugs (2) gegenüber einem angenäherten Raumfahrzeug (1), wobei sich das annähernde und das angenäherte Raumfahrzeug auf Abschnitten ihrer entsprechenden Umlaufbahnen (5,3) befinden, auf denen ihre Geschwindigkeitsvektoren $(\overline{V2}, \overline{V1})$ mindestens annähernd parallel zueinander verlaufen, wobei das angenäherte Raumfahrzeug (1) auf seiner Bahn (3) dreiaxial stabilisiert ist und das angenäherte Raumfahrzeug (1) vom sich annähernden Raumfahrzeug (2) aus beobachtet wird, sowie zur Bestimmung der Entfernung zwischen dem sich annähernden und dem angenäherten Raumfahrzeug nach der tatsächlichen Größe des angenäherten Raumfahrzeugs und dessen scheinbarer Größe aus der Sicht des sich annähernden Raumfahrzeugs,
dadurch gekennzeichnet:

- daß die Beobachtung des angenäherten Raumfahrzeugs (1) in einer Ebene (oy,oz) des sich annähernden Raumfahrzeugs erfolgt, die senkrecht zur Achse des Beobachtungsmittels und durch einen Bezugspunkt (o) des sich annähernden Raumfahrzeugs verläuft;
- daß zu jedem von zwei aufeinanderfolgenden Augenblicken t1 und t2:

  . in dieser Ebene bezogen auf den Bezugspunkt (o) des sich annähernden Raumfahrzeugs die scheinbare Position des angenäherten Raumfahrzeugs gemessen wird;
  . in dieser Ebene die scheinbare Größe des angenäherten Raumfahrzeugs gemessen wird und
  . mit Hilfe der Messungen von scheinbarer Position und Größe sowie der tatsächlichen Größe des angenäherten Raumfahrzeugs die Position des Bezugspunkts (o) des sich annähernden Raumfahrzeugs in einem System von Bezugsachsen (OX,OY,OZ) des angenäherten Raumfahrzeugs gemessen wird;

- daß aus den beiden Positionen des Bezugspunkts (o), die für die Augenblicke t1 und t2 errechnet wurden, sowie aus den bekannten Bewegungsdaten des angenäherten Raumfahrzeugs auf seiner Umlaufbahn im Bezugsachsensystem (0X,0Y,0Z) des angenäherten Raumfahrzeugs für den Augenblick t1 die Komponenten der relativen Geschwindigkeit des sich annähernden Raumfahrzeugs gegenüber dem angenäherten Raumfahrzeug berechnet werden, und
- dadurch, daß aus der Position des für den Augenblick t1 berechneten Bezugspunktes und den Komponenten der relativen Geschwindigkeit, die ebenfalls für den Augenblick t1 berechnet wurden, im Bezugsachsensystem des angenäherten Raumfahrzeugs die Positionskoordinaten des Bezugspunkts des sich annähernden Raumfahrzeugs für einen beliebigen Augenblick t̲ berechnet werden.

2. Verfahren nach Anspruch 1, angewendet auf den Fall, daß das angenäherte Raumfahrzeug eine bekannte große horizontale Spannweite L hat,
dadurch gekennzeichnet:

- daß für jeden Augenblick t1 und t2:

  . der Wert s1 bzw. s2 des Höhenwinkels von Nullpunkt (0) des Bezugsachsensystems des angenäherten Raumfahrzeugs gegenüber dem Bezugspunkt (o) des sich annähernden Raumfahrzeugs gemessen wird;
  . die Werte ag1,ad1 bzw. ag2,ad2 der Azimutwinkel des linken und rechten Endes des angenäherten Raumfahrzeugs gegenüber dem Bezugspunkt des sich annähernden Raumfahrzeugs gemessen werden;
  . aus der Spannweite L und den Höhenwinkel- und Azimutmessungen s1,ag1,ad1 bzw. s2,ag2,ad2 die entsprechenden Positionskoordinaten X1,Y1,Z1 und X2,Y2,Z2 des Bezugspunkts des sich annähernden Raumfahrzeugs im Bezugsachsensystem des angenäherten Raumfahrzeugs berechnet werden;

- daß aus den für die Augenblicke t1 und t2 berechneten Positionskoordinaten X1,Y1,Z1 und X2,Y2,Z2 sowie aus den bekannten Bewegungsdaten des angenäherten Raumfahrzeugs auf seiner Umlaufbahn im Bezugsachsensystem des angenäherten Raumfahrzeugs die Komponenten Xp1, Yp1 und Zp1 der relativen Geschwindigkeit des sich annähernden Raumfahrzeugs gegenüber dem angenäherten Raumfahrzeug für den Augenblick t1 berechnet werden, und
- daß aus den Positionskoordinaten X1,Y1,Z1 und den Geschwindigkeitskomponenten Xp1, Yp1 und Zp1, die für den Augenblick t1 berechnet wurden, die Positionskoordinaten X(t), Y(t) und Z(t) des Bezugspunkts des sich annähernden Raumfahrzeugs für einen beliebigen Augenblick t̲ berechnet werden.

3. Verfahren nach Anspruch 2,
dadurch gekennzeichnet, daß die Beobachtung des angenäherten Raumfahrzeugs mit Hilfe einer Aufnahmevorrichtung erfolgt, die eine Abbildung in einer Größe liefert, die gleich dem Maßstab der scheinbaren Größe bei einer direkten Beobachtung ist.

4. Verfahren nach Anspruch 3, bei dem die optische Achse der Aufnahmevorrichtung gegenüber dem Geschwindigkeitsvektor des sich annähernden Raumfahrzeugs versetzt ist,
dadurch gekennzeichnet, daß vor der Berechnung der Koordinaten X1, Y1, Z1, X2, Y2 und Z2 an den Höhenwinkel- und Azimutwerten s1, s2, ag1, ad1, ag2 und ad2 entsprechende Korrekturwerte angebracht werden.

5. Verfahren nach Anspruch 2, bei dem das angenäherte Raumfahrzeug gleichförmig eine Kreisbahn mit einer Kreisfrequenz $\omega$ beschreibt, dadurch gekennzeichnet, daß die Komponenten der relativen Geschwindigkeit Xp1, Yp1 und Zp1 jeweils lauten:

$$Xp1 = \frac{DE - BF}{\Delta}$$

$$Yp1 = \frac{Y1 - Y1 \cos [\omega(t2-t1)]}{\sin [\omega(t2-t1)]}$$

$$Zp1 = \frac{AF - CE}{\Delta}$$

mit:
$\Delta = 8 - 8 \cos [\omega(t2-t1)] - 3\omega (t2-t1) \sin [\omega (t2-t1)]$

$A = (4/\omega) \sin [\omega(t2\text{-}t1)] - 3 (t2\text{-}t1)$
$B = (2/\omega) \{\cos [\omega(t2\text{-}t1)] - 1\}$
$C = -B$
$D = \{\sin [\omega(t2\text{-}t1)]\}/\omega$
$E = X2 - X1 + \{6 \sin [\omega(t2\text{-}t1)] - 6\omega (t2\text{-}t1)\} Z1$
$F = Z2 + \{3 \cos [\omega(t2\text{-}t1)] - 4\} Z1$

6. Verfahren nach Anspruch 5,
dadurch gekennzeichnet, daß die Positionskoordinaten X(t), Y(t) und Z(t) jeweils lauten :

$$X(t) = X1 - 2/\omega\{Zp1 \cos [\omega(t\text{-}t1)] + (3\omega Z1 - 2Xp1) \sin [\omega(t\text{-}t1)]\} + 3/2 (4\omega Z1 - 2Xp1) (t\text{-}t1) + 2Zp1/\omega$$

$$Y(t) = Y1 \cos [\omega(t\text{-}t1)] + Yp1/\omega \sin [\omega(t\text{-}t1)]$$

$$Z(t) = 1/\omega \{Zp1 \sin [\omega(t\text{-}t1)] - (3\omega Z1 - 2Xp1) \cos [\omega(t\text{-}t1)] + 4\omega Z1 - 2Xp1\}$$

7. Vorrichtung zur Bestimmung der relativen Position und der natürlichen relativen Flugbahn eines sich annähernden Raumfahrzeugs (2) gegenüber einem angenäherten Raumfahrzeug (1), wobei sich das sich annähernde und das angenäherte Raumfahrzeug auf Abschnitten ihrer entsprechenden Umlaufbahnen (5,3) befinden, auf denen ihre Geschwindigkeitsvektoren ($\overline{V2},\overline{V1}$) bezogen auf das geozentrische Bezugssystem mindestens annähernd parallel zueinander verlaufen, das angenäherte Raumfahrzeug auf seiner Umlaufbahn dreiaxial stabilisiert ist und die Vorrichtung Beobachtungsmittel (10) an Bord des sich annähernden Fahrzeugs, Meßmittel (11) zur Bestimmung der scheinbaren Größe des angenäherten Raumfahrzeugs sowie Rechenmittel hat, mit denen aus der scheinbaren Größe und der tatsächlichen Größe des angenäherten Raumfahrzeugs die Entfernung zwischen dem sich annähernden und dem angenäherten Raumfahrzeug berechnet wird,
dadurch gekennzeichnet, daß:

- die Beobachtungsmittel (10) das angenäherte Raumfahrzeug (1) in einer Ebene (oz, oy) des sich annähernden Raumfahrzeugs beobachten, die senkrecht zur Achse der Beobachtungsmittel durch einen Bezugspunkt (o) des sich annähernden Raumfahrzeugs verläuft;
- die Meßmittel (11) in jedem von zwei aufeinanderfolgenden Augenblicken t1 und t2:

  . in dieser Ebene bezogen auf den Bezugspunkt des sich annähernden Raumfahrzeugs die scheinbare Position eines charakteristischen Punktes des angenäherten Raumfahrzeugs und
  . in dieser Ebene die scheinbare Größe des angenäherten Raumfahrzeugs messen;

  und dadurch, daß die Rechenmittel umfassen:
- erste Rechenmittel (12), mit denen in jedem Augenblick t1 und t2 mit Hilfe der Messungen von scheinbarer Position und Größe sowie der tatsächlichen Größe des angenäherten Fahrzeugs die Position des Bezugspunkts des sich annähernden Raumfahrzeugs in einem Bezugsachsensystem des angenäherten Raumfahrzeugs berechnet werden;
- zweite Rechenmittel (13), mit denen aus den beiden Positionen des Bezugspunktes, die für die Augenblicke t1 und t2 berechnet wurden, sowie aus den bekannten Bewegungsdaten des angenäherten Raumfahrzeugs auf seiner Umlaufbahn im Bezugsachsensystem des angenäherten Raumfahrzeugs für den Augenblick t1 die Komponenten der relativen Geschwindigkeit des sich annähernden Raumfahrzeugs gegenüber dem angenäherten Raumfahrzeug berechnet werden, und
- dritte Rechenmittel (14), mit denen aus der für den Augenblick t1 berechneten Position des Bezugspunktes und den ebenfalls für den Augenblick t1 berechneten relativen Geschwindigkeitskomponenten im Bezugsachsensystem des angenäherten Raumfahrzeugs die Positionskoordinaten des Bezugspunkts des sich annähernden Raumfahrzeugs für einen beliebigen Augenblick t̲ berechnet werden.

8. Vorrichtung nach Anspruch 7 für den Fall, daß das angenäherte Raumfahrzeug eine bekannte große horizontale Spannweite L hat,
dadurch gekennzeichnet,

- daß die Meßmittel (11) für jeden Augenblick t1 und t2:

  . den Wert s1 bzw. s2 des Höhenwinkels von Nullpunkt (0) des Bezugsachsensystems des angenäherten Raumfahrzeugs gegenüber dem Bezugspunkt (o) des sich annähernden Raumfahrzeugs messen, und

. die Werte ag1,ad1 bzw. ag2,ad2 der Azimute des linken und rechten Endes des angenäherten Raumfahrzeugs gegenüber dem Bezugspunkt des sich annähernden Raumfahrzeugs messen;

- daß die ersten Rechenmittel (12) aus der Spannweite L und den Höhenwinkel- und Azimutmessungen s1,ag1,ad1 bzw. s2,ag2,ad2 die entsprechenden Positionskoordinaten X1,Y1,Z1 und X2,Y2,Z2 des Bezugspunkts des sich annähernden Raumfahrzeugs im Bezugsachsensystem des angenäherten Raumfahrzeugs errechnen;
- daß die zweiten Rechenmittel (13) aus den für die Augenblicke t1 und t2 berechneten Positionskoordinaten X1,Y1,Z1 und X2,Y2,Z2 sowie aus den bekannten Bewegungsdaten des angenäherten Raumfahrzeugs auf seiner Umlaufbahn im Bezugsachsensystem des angenäherten Raumfahrzeugs die Komponenten Xp1, Yp1 und Zp1 der relativen Geschwindigkeit des sich annähernden Raumfahrzeugs gegenüber dem angenäherten Raumfahrzeug berechnen, und
- daß die dritten Rechenmittel (14) aus den Positionskoordinaten X1,Y1,Z1 und den Geschwindigkeitskomponenten Xp1, Yp1 und Zp1, die für den Augenblick t1 berechnet wurden, die Positionskoordinaten X(t), Y(t) und Z(t) des Bezugspunktes des sich annähernden Raumfahrzeugs für einen beliebigen Augenblick $\underline{t}$ errechnen.

9. Vorrichtung nach Anspruch 8,
dadurch gekennzeichnet, daß die Beobachtungsmittel eine Aufnahmevorrichtung (10) haben, die eine Abbildung in einer Größe liefert, die gleich dem Maßstab der scheinbaren Größe bei einer direkten Beobachtung ist.

10. Vorrichtung nach einem der Ansprüche 8 oder 9,
dadurch gekennzeichnet, daß die Meßmittel (11) eine TV-Vorrichtung mit einem Bildschirm (16) haben, auf dem jeder Punkt durch die Lage eines beweglichen Fadenkreuzes (17,18,19) identifiziert werden kann, das mit Hilfe eines Steuerorgans (20,21,22) verschoben werden kann.

FIG.1

EP 0 561 660 B1

## FIG.2

## FIG.3